# EUROPEAN PATENT APPLICATION

(11) **EP 3 757 039 A1**
(43) Date of publication of application: **30.12.2020**
(21) Application number: 19183014.0
(22) Date of filing: 27.06.2019
(51) Int. Cl.: B65G 17/40, B65G 39/20

(54) **CONVEYOR BELT**

(71) Applicant: Logi Concept Engineering B.V., 7156 NW Beltrum (NL)
(72) Inventor: Brinkers, Joep Hendrik, 7152 KV Eibergen (NL)
(74) Representative: 't Jong, Bastiaan Jacob

(57) **Abstract**

The invention relates to a conveyor belt (1) comprising a plurality of adjacent conveyor belt elements (2) and a plurality of rods (11) connecting adjacent conveyor belt elements, wherein each belt element comprises:
- an elongate body (3) having a support surface;
- first protrusions (4) arranged on a first side of the elongate body and having aligned openings (7);
- second protrusions (5) arranged on a second side opposite of the first side and having aligned openings (8),
wherein the first protrusions interlock with second protrusions of an adjacent belt element and a connecting rod extends through the openings of the interlocked first and second protrusions,
wherein at least one of the conveyor belt elements comprises a support roller (9) arranged on one end of the elongate body and wherein the axis of the support roller is parallel to the longitudinal axis of the elongate body.

## Description

The invention relates to a conveyor belt comprising a plurality of adjacent conveyor belt elements and a plurality of rods connecting adjacent conveyor belt elements, wherein each belt element comprises:
- an elongate body having a support surface;
- first protrusions arranged on a first side of the elongate body and having aligned openings;
- second protrusions arranged on a second side opposite of the first side and having aligned openings,
wherein the first protrusions interlock with second protrusions of an adjacent belt element and a connecting rod extends through the openings of the interlocked first and second protrusions.

US 3854575 describes a conveyor belt, wherein belt elements are provided with interlocking protrusions connected by rods extending through openings in the protrusions. Due to the slot shaped openings, the conveyor belt is suited for curved conveyor belt paths. To this end rollers are provided at the end of some of the belt elements, to take up the forces which are generated when the conveyor belt moves through a curve. The axis of the rollers are perpendicular to the rods and to the supporting surface of the conveyor belts.

US 6578704 discloses a conveyor belt of plastic belt elements with interlocking protrusions and rods to connect the belt elements. Each conveyor belt element is provided at one elongate end with a roller. The axis of the roller is positioned perpendicular to the rods and parallel to the support surface of the conveyor belt. These rollers are provided to reduce friction between a cylindrical tower around which the conveyor belt winds in a spiral way.

EP 0652843 describes a conveyor belt of plastic belt elements with interlocking protrusions and rods to connect the belt elements. Some of the protrusions are removed to provide a space for a roller to be accommodated around one of the rods to support the belt element on a support surface underneath the conveyor belt.

A disadvantage of this known conveyor belt is that two different embodiments of the belt elements are required: one with a protrusion removed for a roller to be accommodated and one with all protrusions present.

Furthermore, the roller is arranged in the support surface of the conveyor belt, such that product supported on the conveyor belt could be damaged due to the rotating roller, could be contaminated by for example any grease leaking from the roller and the roller itself could be contaminated by the products transported on the conveyor belt, such that the lifetime of the roller is reduced.

Also the arrangement of rollers between the belt elements will limit the angle between two belt elements, such that the conveyor belt with such rollers can only have a limited radius of curvature and would only be suitable for straight applications.

Such conveyor belts are widely known and typically made of a plastic, such as acetal plastics. The known conveyor belts are embodied with straight paths or curved paths, typically semi-circular paths.

In the case of curved conveyor belts, the speed of the conveyor belt is limited by the friction force between the support surface of the conveyor belt and the product supported on the conveyor belt in combination with the centrifugal force the product will be subjected to as a result of the belt speed.

So, if a higher throughput is desired, the radius of the conveyor belt can be increased, allowing for a higher belt speed, without the risk of products shifting of the conveyor belt due to centrifugal forces and friction of support surface of the conveyor belt.

However, if the belt speed is increased, the friction of the belt on the support frame will cause increased heat production, which could even lead to the melting of the plastic conveyor belts. This will result in failure of the belt elements.

In case of a curved conveyor belt these friction forces in combination with the speed of the conveyor belt could lead to flipping of the conveyor belt. Flipping is the phenomena, that the outer edge of a curved conveyor belt will be pulled up due to the high pull forces in the conveyor belt.

In applications in which failure of the conveyor belt could lead to larger problems, the friction between the conveyor belt and the support frame should be minimized. An example of such an application is wherein products are shrink wrapped in a foil. A product is provided with a plastic sleeve. The product is then transported through an oven, wherein the sleeve is subjected to heat in order to let the sleeve shrink around the product. When the conveyor belt fails and transport of the products through the oven stops, the products in the oven could get on fire leading to substantial problems.

Another example is an application, in which products are transported through a processing line at high volume. If one part of the processing line fails due to malfunction of the conveyor belt, while the processing stations upstream of the line still are outputting at the same speed or volume, quickly a large pile up of products will occur.

Furthermore, standards prescribe a maximum belt speed of 1 m/s. This is due to the expected generation of static electricity of plastic belts, which could lead to dust explosion. In particular the static electricity is generated by the rubbing of the plastic elements over a support surface. Reducing the friction would allow to increase said maximum speed.

The rubbing of the plastic elements over the support surface also generate dust particles due to wear. This requires that the conveyor belt should be cleaned regularly, which interrupts the process in which the conveyor belt is used.

Accordingly, it is an object of the invention to reduce or even remove the above mentioned disadvantages.

This object is achieved with a conveyor belt according to the preamble, which conveyor belt is characterized in that at least one of the conveyor belt elements comprises a support roller arranged on one end of the elongate body and wherein the axis of the support roller is parallel to the longitudinal axis of the elongate body.

With the support roller on one end of the elongate body, the roller is outside of the area where the products are supported, while the friction of the conveyor belt element is still substantially reduced. As the support roller is outside of the support area of the conveyor belt also allows for the support roller to be shielded increasing safety for operating personel.

Reduction of the friction due to the support roller decreases the energy required to drive the conveyor belt. This allows for longer conveyor belts being driven with a single electric motor, than conveyor belts without the friction reducing support roller.

Furthermore, as the support roller is not arranged on the rod, the movement of the rod is not influenced by the roller. In combination with that the support roller is arranged on an end of the elongate body, the radius of curvature can be maximized and is not limited by the presence of a roller, such as with the conveyor belt according to the prior art.

Preferably, a second support roller is arranged to the elongate body opposite of the other support roller. Although, the conveyor belt elements could be provided with a single support roller, having two support rollers on opposite sides of the elongate body, provides for a stable support with low friction.

In a preferred embodiment of the conveyor belt according to the invention the axis of the support roller is coaxial with the connecting rod extending through the first protrusions of the conveyor belt element.

The bending moments caused in the conveyor belt element by the contact of the support roller with a support surface are reduced by having the axis of the support roller coaxial with the connecting rod.

In a preferred embodiment of the conveyor belt according to the invention the support roller comprises a roller axle arranged parallel with the rod extending through the first protrusions of the conveyor element.

Preferably, the roller axle is provided distal from the roller with a threaded end and wherein the threaded end is screwed into the opening of the first protrusion most proximal to the roller.

With the threaded end it is possible to use one single embodiment of conveyor belt element to compose a conveyor belt according to the invention. A number of support rollers is screwed into desired conveyor belt elements depending on the required load to be supported and the reduction of friction desired.

In yet another embodiment of the conveyor belt according to the invention the threaded end of the roller axle is inserted over a length equal to the length of the opening of the first protrusion most proximal to the roller.

The threaded end fills in this way the opening of the first protrusion most proximal to the roller, such that no dirt can build up in said opening. This allows to meet more easily hygienic requirements, which are typically set in the food industry.

In still a further embodiment of the conveyor belt according to the invention the support roller further comprises a bearing arranged on the roller axle and a ring arranged around the bearing, which ring forms the thread of the support roller.

Because a separate ring is arranged around the bearing, the material of the ring can be adapted to additional requirements, such as friction, noise damping and heat resistance.

Preferably, the ring is of polyurethane, which does not generate any particulate matter and contributes to noise reduction.

These and other features of the invention will be elucidated in conjunction with the accompanying drawings.
Figure 1 shows a perspective view of part of a conveyor belt according to the invention.
Figure 2 shows a top view of a conveyor belt according to the invention.
Figures 3A and 3B show steps of assembling a conveyor belt according to the invention.

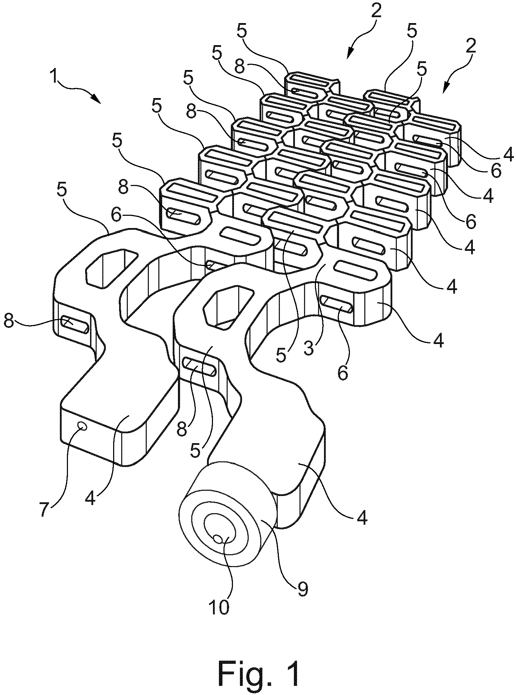

Figure 1 shows a conveyor belt 1 with two conveyor belt elements 2 cut in half. Each conveyor belt element 2 has a wave shaped elongate body 3 with on one side a number of first protrusions 4 and on the other side of the elongate body 3 a number of second protrusions 5.

The first protrusions 4 have elongate openings 6, while the outer most first protrusion 4 has a circular opening 7. The second protrusions 5 are all provided with elongate openings 8.

At one end of the conveyor belt element 2, a support roller 9 is arranged with an axle 10.

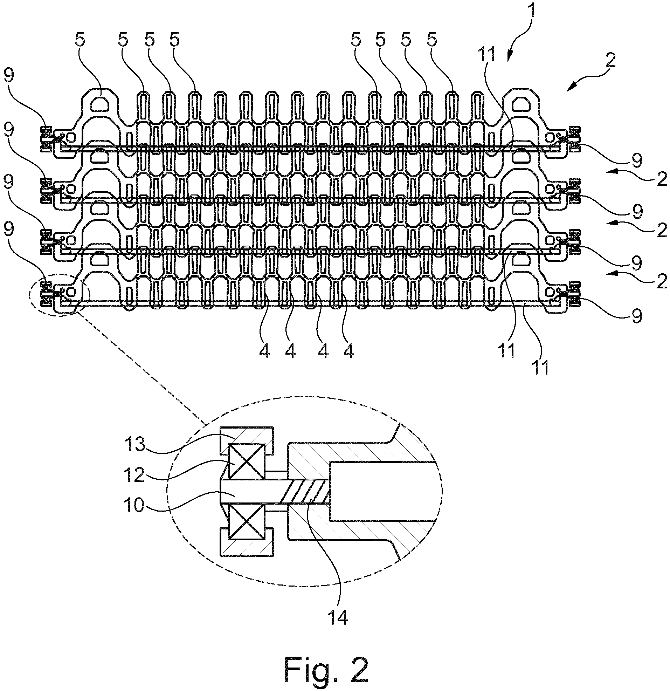

Figure 2 shows the conveyor belt according to the invention in partial cross-sectional view. Conveyor belt elements 2 are arranged with first protrusions 4 interlocking with second protrusions 5. Rods 11 extend through the openings 6, 8 of the protrusions 4, 5 to couple the elements 2. Because the openings 6, 8 are elongate, the formed conveyor belt 1 is able to follow a curved path.

Each support roller 9 is provided with an axle 10. A bearing 12 is arranged on a first end of this axle 10 and the bearing 12 is enclosed by a ring 13, which provides the thread of the support roller 9. The other end of the axle 10 is provided with a threaded end 14, which is screwed into the opening 7 of the first protrusion 4 most proximal to the roller 9.

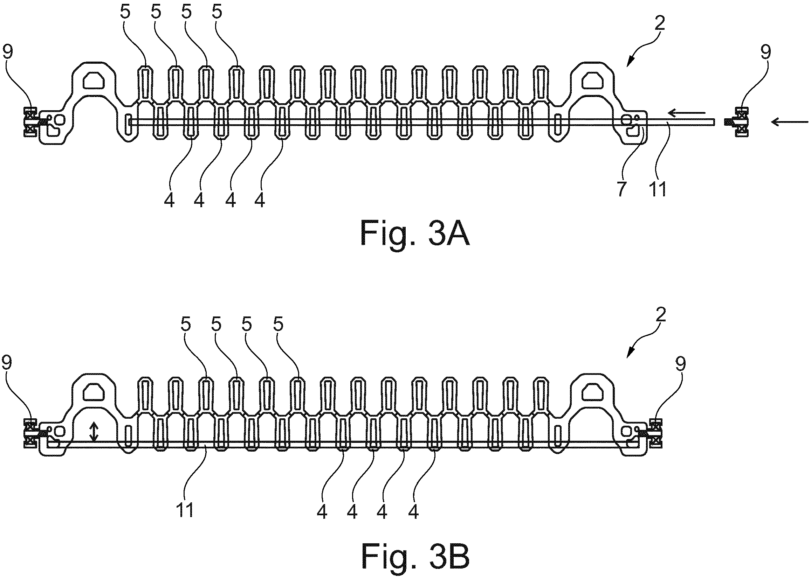

Figure 3A shows schematically a first step of coupling a conveyor belt element 2. A rod 11 is inserted via the opening 7 of the first protrusion 4 most proximal to the roller 9 and then into the several elongate openings 6 of the further first protrusions 4. As the length of the rod 11 is slightly smaller than the length of the conveyor belt element 2, the rod 11 will be positioned outside of the circular openings 7, such that the rod 11 can freely move up and down within the elongate openings 6 and within the elongate openings 8 of the adjacent conveyor belt element 2 (not shown in figures 3A and 3B)

Due to the free movement of the rod 11, the rod 11 is shown in figure 3B positioned to the full end of the first protrusions 4. Furthermore, the threaded end 14 of the support roller 9 is screwed into the opening 7, such that this opening is filled (see also enlarged part of figure 2) and cannot contain any dirt or the like.

## Claims

1. Conveyor belt comprising a plurality of adjacent conveyor belt elements and a plurality of rods connecting adjacent conveyor belt elements, wherein each belt element comprises:
- an elongate body having a support surface;
- first protrusions arranged on a first side of the elongate body and having aligned openings;
- second protrusions arranged on a second side opposite of the first side and having aligned openings,
wherein the first protrusions interlock with second protrusions of an adjacent belt element and a connecting rod extends through the openings of the interlocked first and second protrusions,
**characterized in that**
at least one of the conveyor belt elements comprises a support roller arranged on one end of the elongate body and wherein the axis of the support roller is parallel to the longitudinal axis of the elongate body.

2. Conveyor belt according to claim 1, wherein the axis of the support roller is coaxial with the connecting rod extending through the first protrusions of the conveyor belt element.

3. Conveyor belt according to claim 1 or 2, wherein the support roller comprises a roller axle arranged parallel with the rod extending through the first protrusions of the conveyor element.

4. Conveyor belt according to claim 3, wherein the roller axle is provided distal from the roller with a threaded end and wherein the threaded end is screwed into the opening of the first protrusion most proximal to the roller.

5. Conveyor belt according to claim 4, wherein the threaded end of the roller axle is inserted over a length equal to the length of the opening of the first protrusion most proximal to the roller.

6. Conveyor belt according to any of the claims 3, 4 or 5, wherein the support roller further comprises a bearing arranged on the roller axle and a ring arranged around the bearing, which ring forms the thread of the support roller.
